# EUROPEAN PATENT APPLICATION

(11) **EP 4 831 349 A1**
(43) Date of publication of application: **28.10.2026**
(21) Application number: 24908026.8
(22) Date of filing: 17.12.2024
(51) Int. Cl.: C25B 9/70, C25B 1/04, C25B 13/07, C25B 9/60, C25B 15/02, C25B 15/021

(54) **WATER ELECTROLYSIS STACK ASSEMBLY AND HOT BOX APPARATUS**

(30) Priority: 18.12.2023 KR 20230184938
(71) Applicant: POSCO Holdings Inc., Pohang-si, Gyeongsangbuk-do 37859 (KR)
(72) Inventor: YANG, Ye-Jin, Pohang-si, Gyeongsangbuk-do 37877 (KR); AHN, Jin-Soo, Pohang-si, Gyeongsangbuk-do 37877 (KR)
(74) Representative: Pfenning, Meinig & Partner mbB
(86) International application number: PCT/KR2024/020528
(87) International publication number: WO 2025/135743

(57) **Abstract**

The present invention provides a water electrolysis stack assembly and a hot box apparatus. In an embodiment, provided is a water electrolysis stack assembly including: a case including an upper surface part, a side surface part, and a gas outflow pipe formed in the side surface part; and a stack accommodated in an inner space of the case, wherein a surface pressure is applied to the stack by the upper surface part of the case.

## Description

### Technical Field

The present disclosure relates to a water electrolysis stack assembly and a hot box apparatus.

### Background Art

A solid oxide electrolysis cell (SOEC) using the electrolysis of water operates as a reverse reaction of a solid oxide fuel cell (SOFC). A solid oxide electrolysis cell has the advantage of having a simple structure, as all components thereof are formed of solids, and there are no problems with electrolyte loss, replenishment, or corrosion.

In addition, since high-temperature water electrolysis technology requires less electrolysis energy for high-temperature steam than for room-temperature water, as the temperature increases, less electrolysis energy is consumed, and since the hydrogen production efficiency is relatively better than that of the electrolysis of water performed at room or low temperatures, it is also economically viable.

A high-temperature water electrolysis system consists of a hot box including an electrolysis stack and a Balance of Plant (BOP). Examples of the Balance of Plant (BOP) include a Mechanical BOP (MBOP) apparatus, supplying steam or air to a stack module and capturing hydrogen or oxygen, and an Electrical BOP (EBOP) apparatus, supplying renewable or nuclear electricity to the stack. The MBOP apparatus consists of a heat exchanger, a gas-liquid separator, or the like, and the EBOP apparatus consists of a power converter, a power monitoring system, or the like.

In general, a single stack requires a total of four pipes, such as an air inflow pipe, an oxygen outflow pipe, a steam inflow pipe, and a hydrogen outflow pipe. As high-temperature water electrolysis systems become larger, dozens to hundreds of unit stacks are used, but in this case, there is a problem in which the design becomes very complex due to the numerous pipes inside the hotbox. In addition, there was a problem in that the operational reliability and overall efficiency of a system may be reduced due to the complexity of the apparatus for disposing the balance of plant (BOP) to monitor a voltage, pressure, temperature, or the like, thereof, on the stack.

A manifold of the stack is a pipe, supplying or capturing gas to the individual stacked cells. There are internal manifold methods, where the manifold is located inside the stack, and external manifold methods, where the manifold is located outside of the stack.

Using external manifold methods has the advantage of opening the flow of the stack and reducing the number of pipes, required for the stack. However, conventional external manifold methods had a limitation in that it was difficult to supply gas into the interior of the stack during stack pretreatment or operation within a hot box.
(Patent Document 1) KR 10-2013-0135430 A

### Summary of Invention

### Technical Problem

An aspect of the present disclosure is to provide a water electrolysis stack assembly and a hot box apparatus that can simplify a stack manufacturing process and improve the durability of the apparatus.

In an embodiment, an aspect of the present disclosure is to provide a water electrolysis stack assembly and a hot box apparatus, the water electrolysis stack assembly including a case for applying constant surface pressure to a stack from the start of a pretreatment process for the stack until an operation thereof within the hot box apparatus.

In an embodiment, an aspect of the present disclosure is to provide a water electrolysis stack assembly and a hot box apparatus for implementing an external manifold structure using a case accommodating the stack.

### Solution to Problem

To achieve the above-described objects, according to an aspect of the present disclosure, provided are a water electrolysis stack assembly and a hot box apparatus as follows.

In an embodiment of the present disclosure, provided is a water electrolysis stack assembly including a case including an upper surface portion, a side surface portion, and a gas outflow pipe formed in the side surface portion, and a stack accommodated in an internal space of the case, wherein surface pressure is applied to the stack by the upper surface portion of the case.

In an embodiment of the present disclosure, provided is a hot box apparatus including a housing, a first gas outflow pipe formed on a side surface of the housing, one or more stack assemblies disposed within the housing, and a stack module manifold supporting the one or more stack assemblies within the housing, and connected to the one or more stack assemblies, wherein the one or more stack assemblies include a case including an upper surface portion, a side surface portion, and a second gas outflow pipe formed in the side surface portion, and a stack accommodated in an internal space of the case, wherein surface pressure is applied to the stack by the upper surface portion of the case.

### Advantageous Effects of Invention

According to the present disclosure, a water electrolysis stack assembly and a hot box apparatus that can simplify a stack manufacturing process and improve the durability of the apparatus through the configuration described above, may be provided.

In an embodiment of the present disclosure, a water electrolysis stack assembly and a hot box apparatus, the water electrolysis stack assembly including a case for applying constant surface pressure to a stack from the start of a pretreatment process for the stack until an operation thereof within the hot box apparatus, may be provided.

In an embodiment of the present disclosure, a water electrolysis stack assembly and a hot box apparatus that can implement an external manifold structure using a case accommodating the stack, may be provided.

### Brief Description of Drawings

FIG. 1A illustrates a schematic cross-sectional view of a stack assembly according to an embodiment of the present disclosure.
FIG. 1B illustrates a schematic side cross-sectional view of a stack assembly according to an embodiment of the present disclosure.
FIG. 2A illustrates a schematic cross-sectional view of a stack assembly according to an embodiment of the present disclosure.
FIG. 2B illustrates a schematic side cross-sectional view of a stack assembly according to an embodiment of the present disclosure.
FIG. 3 is a schematic view of a hot box apparatus according to an embodiment of the present disclosure.
FIG. 4 is a schematic view of a hot box apparatus according to an embodiment of the present disclosure.
FIG. 5 is a flowchart of a method for manufacturing a stack assembly according to an embodiment of the present disclosure.

### Mode for Invention

Hereinafter, preferred embodiments of the present disclosure will be described in detail so that those skilled in the art could easily practice the present disclosure with reference to the accompanying drawings. However, in describing a preferred embodiment of the present disclosure in detail, if it is determined that a detailed description of a related known function or configuration may unnecessarily obscure the subject matter of the present disclosure, the detailed description will be omitted. In addition, the same reference numerals are used throughout the drawings for parts having similar functions and actions. In addition, in the present specification, terms such as 'upper,' 'upper portion,' 'upper surface,' 'lower,' 'lower portion,' 'lower surface,' 'side surface,' and the like are based on the drawings, and in practice, it may be different depending on a direction in which the components are disposed.

In addition, throughout the specification, when a part is said to be 'connected' to another part, this is not only when it is 'directly connected,' but also when it is 'indirectly connected' with other components therebetween. In addition, 'including' a certain component means that other components may be further included without excluding other components unless otherwise stated.

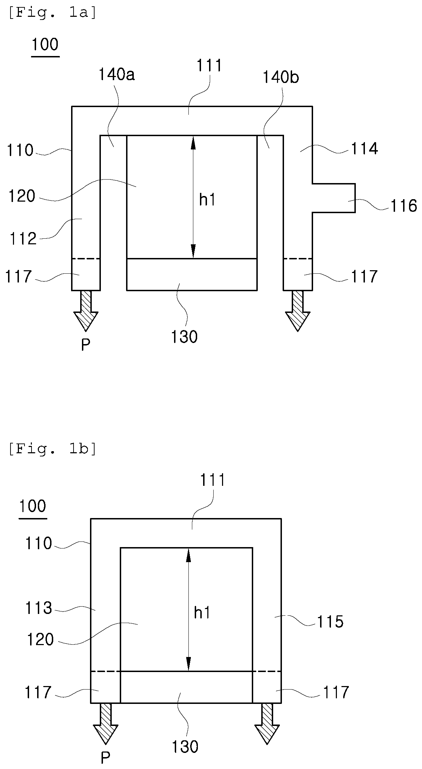

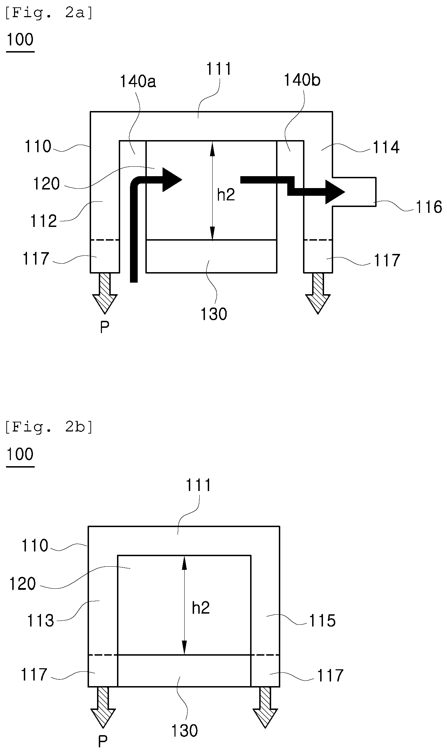

FIGS. 1A, 1B, 2A, and 2B schematically illustrate a stack assembly according to an embodiment of the present disclosure.

FIGS. 1A and 1B illustrate a stack assembly 100 before a high-temperature pretreatment process is performed on a stack 120. FIG. 1A is a front cross-sectional view of the stack assembly 100 before the high-temperature pretreatment process is performed, and FIG. 1B is a side cross-sectional view of the stack assembly 100 before the high-temperature pretreatment process is performed.

FIGS. 2A and 2B illustrate a stack assembly 100 after a high-temperature pretreatment process is performed on a stack 120. FIG. 2A is a front cross-sectional view of the stack assembly 100 after the high-temperature pretreatment process is performed, and FIG. 2B is a side cross-sectional view of the stack assembly 100 after the high-temperature pretreatment process is performed.

The stack assembly 100 according to an embodiment of the present disclosure may include a case 110, a stack 120, and a non-repeating unit 130.

The case 110 is intended to accommodate the stack 120 and the non-repeating unit 130, and may have a rectangular frame shape with an open bottom and including an internal space.

The case 110 may include an upper surface portion 111 and a side surface portion connected to the upper surface portion 111. The side surface portion may include a first side surface portion 112, a second side surface portion 113, a third side portion 114, and a fourth side surface portion 115.

The first side surface portion 112 may be connected to the second side surface portion 113 at one end thereof, and be connected to the fourth side surface portion 115 at the other end thereof. The second side surface portion 113 and the fourth side surface portion 115 may be disposed to face each other.

The third side surface portion 114 may be connected to the second side surface portion 113 at one end thereof, and be connected to the fourth side surface portion 115 at the other end thereof. The third side surface portion 114 and the first side surface portion 112 may be disposed to face each other.

The case 110 may further include a gas outflow pipe 116 formed in the side surface portion. The gas outflow pipe 116 may be disposed, for example, in the third side surface portion 114.

The gas outflow pipe 116 may communicate the internal space of the case 110 with the outside of the case 110. Therefore, fluid located in the internal space of the case 110 may be discharged to the outside of the case 110 through the gas outflow pipe 116.

The stack 120 may have a structure in which a plurality of cell units are stacked. The plurality of cell units may include solid oxide electrolysis cells (SOEC) generating oxygen or hydrogen.

The plurality of cell units may generate oxygen by receiving air and through an oxidation reaction, or generate hydrogen by receiving steam (water vapor) and through a reduction reaction.

When the stack 120 is accommodated in the internal space of the case 110, an upper surface of the stack 120 may be in contact with an upper surface portion 111 of the case 110, and surface pressure may be applied to the stack 120 by the upper surface portion 111.

The non-repeating unit 130 may support the stack 120 from below the stack 120. An upper surface of the non-repeating unit 130 may be in contact with a lower surface of the stack 120.

The non-repeating unit 130 may refer to a component disposed therebelow, not having a repeating structure, unlike the stack 120 in which some components among the components, comprising the stack assembly 100, are repeatedly stacked to form a structure.

The non-repeating unit 130 may include, for example, a support plate supporting the stack 120, an end plate finishing the bottom of the stack assembly 100, and a manifold injecting gas into the stack 120. The case 110 may accommodate the stack 120 and the non-repeating unit 130. With the stack 120 and the non-repeating unit 130 accommodated in the internal space of the case 110, the case 110 may cover an upper surface of the stack 120, a side surface of the stack 120, and a side surface of the non-repeating unit 130.

The side surface portion of the case 110 may be in contact with the side surface of the stack 120 and the side surface of the non-repeating unit 130, or may be spaced apart from the side surface of the stack 120 and the side surface of the non-repeating unit 130 to cover the side surface of the stack 120 and the side surface of the non-repeating unit 130.

Specifically, the stack 120 may have an external manifold structure for a first gas and an internal manifold structure for a second gas.

For example, the first gas to which the external manifold structure is applied may be air used in an oxidation reaction and oxygen generated by the oxidation reaction, and the second gas to which the internal manifold structure is applied may be steam used in a reduction reaction and hydrogen generated by the reduction reaction.

The first gas generated from the stack 120 may be discharged from the internal space of the case 110 to the outside of the case 110 through a gas outflow pipe 116.

For example, a first gap 140a may be formed between the first side surface portion 112 and the stack 120, and a second gap 140b may be formed between the third side surface portion 114 and the stack 120.

For example, the first gas may be supplied to the stack 120 through the first gap 140a and may cause an oxidation reaction while passing through the stack 120. The first gas may be introduced from the stack 120 into the gas outflow pipe 116 through the second gap 140b, and be discharged to the outside of the case 110 through the gas outflow pipe 116.

Meanwhile, the second side surface portion 113 and the fourth side surface portion 115 may be in contact with the side surface of the opposing stack 120 and the side surface of the non-repeating unit 130. The flow of the second gas may be controlled by the non-repeating unit 130.

The stack 120 may further include a sealant, a separator, and a current collector. Shrinkage of the sealant may occur due to a high-temperature pretreatment process for the stack 120. A thickness of the sealant may be reduced, for example, by a shrinkage rate of 30%.

As illustrated in FIGS. 1A and 1B, the stack 120 may have a first thickness (h1) before a pretreatment process for the stack 120 is performed.

During the pretreatment process for manufacturing a stack, gas should be supplied while applying a constant amount of surface pressure to the stack 120. The case 110 of the stack assembly 100 according to the present disclosure may apply a constant amount of surface pressure to the stack 120 while performing the pretreatment process for the stack 120.

In addition, as illustrated in FIGS. 2A and 2B, the stack 120 may have a second thickness (h2) after a pretreatment process for the stack 120 is performed. A change in a thickness of the stack 120 before and after the pretreatment process for the stack 120 is performed is due to the phenomenon of the sealant shrinking due to high-temperature treatment, wherein the second thickness (h2) may have a value smaller than the first thickness (h1).

The case 110 may further include a pressure member 117disposed therebelow. The pressure member 117 may include, for example, a spring pipe or a load cell.

The case 110 may control surface pressure applied to the stack 120 using the pressure member 117. For example, from the start of the pretreatment process for the stack 120 until the end of the pretreatment process for the stack 120, the case 110 may be controlled to apply first surface pressure P of a certain size to the stack 120 using the pressure member 117.

The stack assembly 100 may further include a fastening member, fastened to the case 110 from below the stack 120. The fastening member may be fastened to the case 110 so that the first surface pressure P applied to the stack 120 by the case 110 is maintained after the pretreatment process for the stack 120 is completed.

The stack assembly 100 according to the present disclosure may apply an external manifold structure by using a case 110 accommodating the stack 120 from the pretreatment process without additionally providing a separate external manifold member, thereby simplifying the process.

In addition, the stack assembly 100 according to the present disclosure has the effect of preventing leakage caused by a gasket seal when applying a conventional external manifold member.

In addition, by maintaining pressure between the case 110 and the stack 120, it is possible to distribute a uniform flow rate throughout the stack 120, and to improve the durability and reliability of the stack 120.

The stack assembly 100 according to the present disclosure may simplify the entire process without requiring an additional assembly process by attaching the case 110, which is used from the pretreatment operation of the stack 120, and applying the same directly to the hot box apparatus.

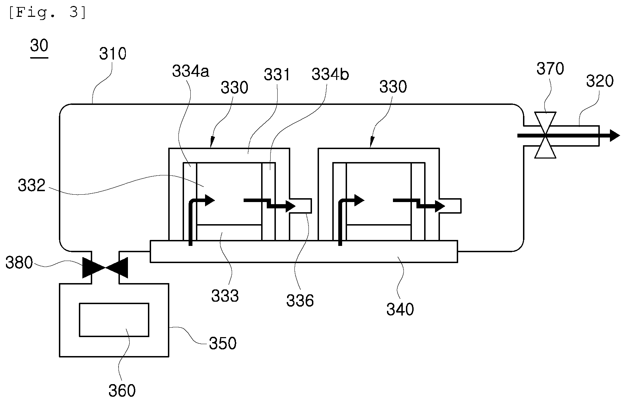

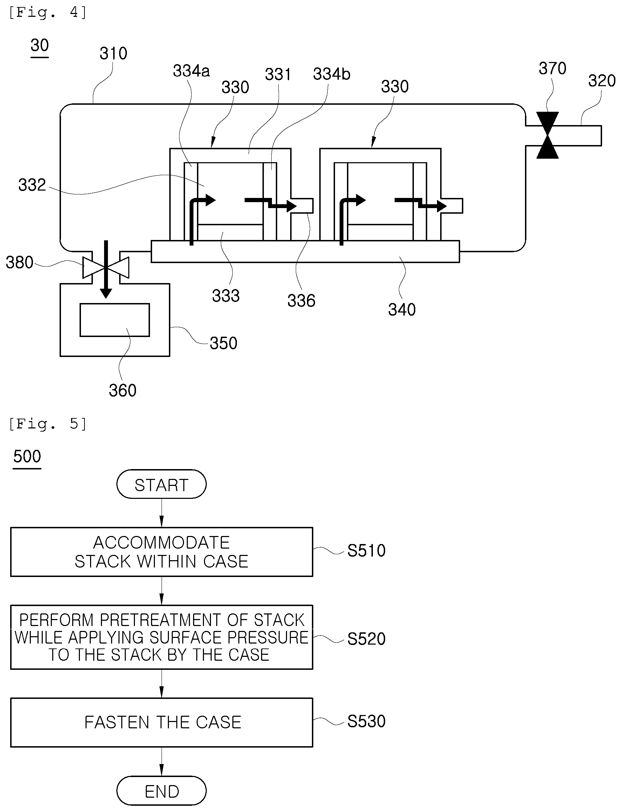

FIGS. 3 and 4 schematically illustrate a hot box apparatus according to an embodiment of the present disclosure. A hot box apparatus 30 according to an embodiment of the present disclosure may include a housing 310, a first gas outflow pipe 320, one or more stack assemblies 330, and a stack module manifold 340.

The first gas outflow pipe 320 may be formed on a side surface of the housing 310. The first gas outflow pipe 320 may communicate an internal space of the housing 310 with the outside of the housing 310. Therefore, fluid located in the internal space of the housing 310 may be discharged to the outside of the housing 310 through the first gas outflow pipe 320.

One or more stack assemblies 330 may be implemented through the stack assembly 100 illustrated in FIG. 2A and FIG. 2B, described above.

The stack assembly 330 may include a case 331, a stack 332, and a non-repeating unit 333.

The case 331 is for accommodating the stack 332 and the non-repeating unit 333, and may have a rectangular frame shape with an open bottom and including an internal space.

The case 331 may include an upper surface portion and a side surface portion connected to the upper surface portion. The case 331 may further include a second gas outflow pipe 336 formed in the side surface portion.

The second gas outflow pipe 336 may communicate an internal space of the case 331 with the outside of the case 331. Therefore, fluid located in the internal space of the case 331 may be discharged to the outside of the case 331 through the second gas outflow pipe 336. In the hot box apparatus 30, the outside of the case 331 may be the internal space of the housing 310.

The stack 332 may have a structure in which a plurality of cell units, a sealant, a separator, and a current collector are stacked. The plurality of cell units may include solid oxide water electrolysis cells generating oxygen or hydrogen.

The plurality of cell units may generate oxygen by receiving air and through an oxidation reaction, or generate hydrogen by receiving steam (water vapor) and through a reduction reaction.

When the stack 332 is accommodated in the internal space of the case 331, an upper surface of the stack 332 may be in contact with an upper surface portion of the case 331, and surface pressure may be applied to the stack 332 by the upper surface portion of the case 331.

The non-repeating unit 333 may support the stack 332 from below the stack 332. An upper surface of the non-repeating unit 333 may be in contact with a lower surface of the stack 332.

The non-repeating unit 333 may include, for example, a support plate supporting the stack 332, an end plate finishing the lower surface of the stack assembly 330, and a manifold injecting gas into the stack 332.

The case 331 may accommodate a stack 332 and a non-repeating unit 333. With the stack 332 and the non-repeating unit 333 accommodated in the internal space of the case 331, the case 331 may cover an upper surface of the stack 332, a side surface of the stack 332, and a side surface of the non-repeating unit 333.

The side surface portion of the case 331 may be in contact with the side surface of the stack 332 and the side surface of the non-repeating unit 333, or may be spaced apart from the side surface of the stack 332 and the side surface of the non-repeating unit 333 to cover the side surface of the stack 332 and the side surface of the non-repeating unit 333.

Specifically, the stack 332 may have an external manifold structure for a first gas and an internal manifold structure for a second gas.

For example, the first gas to which the external manifold structure is applied may be air used in an oxidation reaction and oxygen generated by the oxidation reaction, and the second gas to which the internal manifold structure is applied may be steam used in a reduction reaction and hydrogen generated by the reduction reaction.

The first gas generated from the stack 332 may be discharged from an internal space of the case 331 into an internal space of the housing 310, which is outside of the case 331, through the gas outflow pipe 116.

A first gap 334a and a second gap 334b may be formed between the case 331 and the stack 332. The first gap 334a and the second gap 334b may be formed between two opposing side surface portions of the case 331 and the stack 332. The remaining two side surface portions of the case 331 may be in contact with the stack 332.

For example, a first gas may be supplied to the stack 332 through the first gap 334a and can cause an oxidation reaction while passing through the stack 332. The first gas may be introduced from the stack 332 into the second gas outflow pipe 336 through the second gap 334b, and may be discharged into the internal space of the housing 310, which is outside of the case 331, through the second gas outflow pipe 336.

The flow of the second gas may be controlled by the non-repeating unit 333.

One or more stack assemblies 330 may be disposed a stack module manifold 340, and at least a portion thereof may be connected to the stack module manifold 340.

The stack module manifold 340 includes one or more pipes, and can control the flow of the first gas and the second gas. For example, at least one of the first gas and the second gas may be supplied to the one or more stack assemblies 330 through the stack module manifold 340.

A hot box apparatus 30 according to the present disclosure may reduce the number of pipes, required for the stack module manifold 340, and simplify a structure of the stack module manifold 340. Thereby, a space occupied by the stack module manifold 340 within the hot box apparatus 30 may be reduced, and the hydrogen production efficiency of the water electrolysis system itself may be improved.

Referring to FIGS. 3 and 4, the hot box apparatus 30 may further include an auxiliary chamber 350, a temperature control device 360, a first valve 370, and a second valve 380.

The auxiliary chamber 350 may be connected to one side in a lower portion of the housing 310. The auxiliary chamber 350 may be for accommodating a temperature control device 360.

The temperature control device 360 may be disposed within the auxiliary chamber 350, and may control the temperature of the housing 310. The temperature control device 360 may include, for example, a heater and a heat exchanger.

A first valve 370 installed in a first gas outflow pipe 320, and a flow rate of gas moving through the first gas outflow pipe 320 may be controlled according to a degree of opening of the first valve 370.

A second valve 380 is installed between the housing 310 and the auxiliary chamber 350, and a flow rate of gas moving from the internal space of the housing 310 to the internal space of the auxiliary chamber 350 may be controlled according to a degree of opening of the second valve 380.

FIG. 3 illustrates a state in which a first valve 370 is opened and a second valve 380 is closed in a hot box apparatus 30 according to an embodiment of the present disclosure. When the first valve 370 is opened and the second valve 380 is closed, a first gas discharged from a stack assembly 330 into an internal space of the housing 310 through a second gas outflow pipe 336 may be discharged to the outside of the housing 310 through a first gas outflow pipe 320.

FIG. 4 illustrates a state in which the first valve 370 is closed and a second valve 380 is opened in a hot box apparatus 30 according to an embodiment of the present disclosure. When the first valve 370 is closed and the second valve 380 is opened, a first gas discharged from a stack assembly 330 into an internal space of the housing 310 through a second gas outflow pipe 336 may be moved from the internal space of the housing 310 to an internal space of an auxiliary chamber 350. The first gas is supplied to a temperature control device 360 disposed in the auxiliary chamber 350 and may be used for temperature control.

The stack assembly and the hot box apparatus including the stack assembly according to the present disclosure may implement an external manifold structure by using a case accommodating the stack from a pretreatment process without a separate external manifold member.

The hot box apparatus to which a stack assembly according to the present disclosure is applied has the advantage that a shape of a stack module manifold applied to the modularized stack assembly may be simplified.

In addition, the durability and reliability of the stack may be improved by maintaining pressure between the stack and the case so that a uniform flow rate may be distributed throughout the stack.

FIG. 5 is a flowchart of a method for manufacturing a stack assembly according to an embodiment of the present disclosure.

Referring to FIG. 5, a method for manufacturing a stack assembly 500 may include accommodating a stack within a case (S510), performing pretreatment of the stack while applying surface pressure to the stack by the case (S520), and fastening the case (S530).

The stack assembly manufactured according to FIG. 5 may be implemented as the stack assembly 100 of FIGS. 2A and 2B and the stack assembly 330 included in the hot box apparatus 30 of FIGS. 3 and 4.

According to the present disclosure, when operating under pressure, compared to conventional apparatuses that should control a steam line, an air line, and an internal space of a hot box to a uniform pressure, the hot box apparatus including a stack assembly has the effect of facilitating the operations under pressure and improving system efficiency, since only the steam line and the internal space of the hot box need to be controlled to a uniform pressure.

While example embodiments have been shown and described above, it will be apparent to those skilled in the art that modifications and variations could be made without departing from the scope of the present disclosure as defined by the appended claims.

## Claims

1. A water electrolysis stack assembly, comprising:
a case including an upper surface portion, a side surface portion, and a gas outflow pipe formed in the side surface portion; and
a stack accommodated in an internal space of the case,
wherein surface pressure is applied to the stack by the upper surface portion of the case.

2. The water electrolysis stack assembly of claim 1, further comprising:
a non-repeating unit supporting the stack from below the stack,
wherein the case accommodates the stack and the non-repeating unit to cover an upper surface of the stack, a side surface of the stack, and a side surface of the non-repeating unit.

3. The water electrolysis stack assembly of claim 2, wherein the stack has an external manifold structure for a first gas and an internal manifold structure for a second gas, and
the first gas is discharged from the stack to the outside of the case through the gas outflow pipe.

4. The water electrolysis stack assembly of claim 3, wherein the side surface portion includes a first side surface portion, a second side surface portion connected to the first side surface portion, a third side surface portion, facing the first side surface portion, and a fourth side surface portion, facing the second side surface portion,
the gas outflow pipe is formed in the third side surface portion,
a first gap is formed between the first side surface portion and the stack, and
a second gap is formed between the third side surface portion and the stack, and
the first gas is supplied to the stack through the first gap, and is introduced from the stack into the gas outflow pipe through the second gap.

5. The water electrolysis stack assembly of claim 4, wherein the second side surface portion and the fourth side surface portion are in contact with the stack, and
the flow of the second gas is controlled using the non-repeating unit.

6. The water electrolysis stack assembly of claim 1, wherein before a pretreatment process for the stack is performed, the stack has a first thickness, and after the pretreatment process is performed, the stack has a second thickness, smaller than the first thickness,
wherein the case further includes a pressure member disposed therebelow, and is controlled using the pressure member so that first surface pressure is applied to the stack from the start of the pretreatment process until the end of the pretreatment process.

7. The water electrolysis stack assembly of claim 6, further comprising:
a fastening member fastened to the case from below the stack,
wherein the fastening member is fastened to the case so that the first surface pressure is maintained on the stack after the pretreatment process is completed.

8. A hot box apparatus, comprising:
a housing;
a first gas outflow pipe formed on a side surface of the housing;
one or more stack assemblies disposed within the housing; and
a stack module manifold supporting the one or more stack assemblies within the housing, and connected to the one or more stack assemblies,
wherein the one or more stack assemblies include:
a case including an upper surface portion, a side surface portion, and a second gas outflow pipe formed in the side surface portion; and
a stack accommodated in an internal space of the case,
wherein surface pressure is applied to the stack by the upper surface portion of the case.

9. The hot box apparatus of claim 8, wherein the stack assembly further includes a non-repeating unit supporting the stack from below the stack,
wherein the case accommodates the stack and the non-repeating unit to cover an upper surface of the stack, a side surface of the stack, and a side surface of the non-repeating unit.

10. The hot box apparatus of claim 9, wherein the stack has an external manifold structure for a first gas and an internal manifold structure for a second gas,
wherein the first gas is discharged from the stack into an internal space of the housing through the second gas outflow pipe.

11. The hot box apparatus of claim 10, wherein the side surface portion includes a first side surface portion, a second side surface portion connected to the first side surface portion, a third side surface portion facing the first side surface portion, and a fourth side surface portion facing the second side surface portion,
the second gas outflow pipe is formed in the third side surface portion,
a first gap is formed between the first side surface portion and the stack,
a second gap is formed between the third side surface portion and the stack, and
the first gas is supplied to the stack through the first gap, and is introduced from the stack into the second gas outflow pipe through the second gap.

12. The hot box apparatus of claim 11, wherein the second side surface portion and the fourth side surface portion are in contact with the stack,
the flow of the second gas is controlled using the non-repeating unit.

13. The hot box apparatus of claim 10, wherein the hot box apparatus further comprises
a first valve for controlling a flow rate of gas, moving through the first gas outflow pipe,
wherein, when the first valve is opened, the first gas is discharged from the internal space of the housing to the outside of the housing through the first gas outflow pipe.

14. The hot box apparatus of claim 10, further comprising:
an auxiliary chamber connected to a lower portion of the housing; and
a temperature control device disposed within the auxiliary chamber, and controlling the temperature of the housing.

15. The hot box apparatus of claim 14, further comprising:
a second valve for controlling a flow rate of gas moving from the internal space of the housing to an internal space of the auxiliary chamber,
wherein, when the second valve is opened, the first gas is supplied from the internal space of the housing to the temperature control device within the auxiliary chamber.
